Europäisches Patentamt

European Patent Office

Office européen des brevets

(11) Veröffentlichungsnummer: **0 081 709**
**B1**

# EUROPÄISCHE PATENTSCHRIFT

(45) Veröffentlichungstag der Patentschrift:
02.05.85

(21) Anmeldenummer: 82110861.0

(22) Anmeldetag: 24.11.82

(51) Int. Cl.⁴: **C 09 D 3/80**, **C 09 D 3/81**,
**C 08 L 33/06**, **C 08 F 2/04**

(54) Einbrennlacke mit hohem Feststoffgehalt.

(30) Priorität: 04.12.81 DE 3148051

(43) Veröffentlichungstag der Anmeldung:
22.06.83 Patentblatt 83/25

(45) Bekanntmachung des Hinweises auf die Patenterteilung:
02.05.85 Patentblatt 85/18

(84) Benannte Vertragsstaaten:
AT BE DE FR GB NL SE

(56) Entgegenhaltungen:
DE - A - 2 351 606

(73) Patentinhaber: BASF Aktiengesellschaft,
Carl-Bosch-Strasse 38, D-6700 Ludwigshafen (DE)

(72) Erfinder: Gimpel, Juergen, Dr., Osloer Weg 44,
D-6700 Ludwigshafen (DE)
Erfinder: Jaeckel, Klaus-Peter, Dr.,
Feuerbachstrasse 21, D-6703 Limburgerhof (DE)
Erfinder: Sander, Hans, Dr., Petersstrasse 2,
D-6700 Ludwigshafen (DE)

ACTORUM AG

## Beschreibung

Die Erfindung betrifft Einbrennlacke mit hohem Feststoffgehalt auf Basis hydroxylgruppenhaltiger Copolymerisate, die ggf. in Kombination mit üblichen, vernetzend wirkenden niedermolekularen oder makromolekularen Verbindungen eingesetzt und zur Herstellung witterungsbeständiger Lackierungen verwendet werden.

Aus den US-PS Nrn. 2853463, 2681897, 2900359, der DE-OS Nr. 1932587 sowie aus „Industrial & Engineering Chemistry", 53 (1961), S. 466 bis 488, sind Einbrennlacke bekannt, die ein hydroxylgruppenhaltiges Mischpolymerisat und ein Aminoplastharz enthalten. In der DE-PS Nr. 2351606 werden hydroxylgruppenhaltige Copolymerisate beschrieben, die als Lackbindemittel eine hohe Füllkraft und eine hohe Sicherheit gegen Überbrennen aufweisen. Diese Copolymerisate eignen sich jedoch nicht als Bindemittel für Klardecklacke, die gleichzeitig eine hohe Witterungsbeständigkeit, gute mechanische Gebrauchseigenschaften und einen hohen Feststoffgehalt bei Spritzviskosität aufweisen. Wird bei den Polymerisaten des vorgegebenen Stands der technik das Molekulargewicht (der K-Wert) verringert, so verschlechtern sich die allgemeinen Gebrauchseigenschaften, und vor allem die Witterungsbeständigkeit wird erheblich schlechter.

Ziel der vorliegenden Erfindung ist es, spezielle hydroxylgruppenhaltige Copolymerisate als Bindemittel für *high solid*-Klardecklacke aufzuzeigen, die gegenüber dem Stand der Technik eine bessere Witterungsbeständigkeit, bei gleichzeitig hoher Filmärte und guter Elastizität aufweisen.

Gegenstand der vorliegenden Erfindung sind Einbrennlacke auf der Basis hydroxylgruppenhaltiger Copolymerisate, ggf. in Kombination mit üblichen, vernetzend wirkenden Aminoplastvorkondensaten, die dadurch gekennzeichnet sind, dass sie als Bindemittel ein Copolymerisat aus

A) 18 bis 27 Gew.-% mindestens eines Monoacryl- oder Monomethacrylesters eines 2 bis 4 Kohlenstoffatome enthaltenden Alkandiols,

B) 28 bis 45 Gew.-% eines Esters der Acryl- oder Methacrylsäure mit 3 bis 8 Kohlenstoffatome enthaltenden Monoalkoholen, dessen Homopolymerisat eine Glastemperatur von weniger als −40° C aufweist,

C) 32 bis 50 Gew.-% eines Esters der Acryl- oder Methacrylsäure, dessen Homopolymerisat eine Glastemperatur über 35° C aufweist.

D) 0,5 bis 3 Gew.-% Acryl- oder Methacrylsäure enthalten, mit der Massgabe, dass die Summe der unter A bis D genannten Prozentzahlen 100 ist und der K-Wert nach Fikentscher 13 bis 17 beträgt.

Gegenstand der vorliegenden Erfindung ist ausserdem die Verwendung dieser Einbrennlacke als Decklack für Mehrschichtenlackierung, insbesondere als Metallicklardecklack mit hohem Feststoffgehalt und guter Witterungsbeständigkeit.

Die erfindungsgemässen Einbrennlacke weisen einen hohen Feststoffgehalt bei Spritzviskosität auf und ergeben Überzüge mit sehr guter Witterungsbeständigkeit. Sie besitzen gleichzeitig eine hohe Filmhärte und eine gute Elastizität. Die Summe dieser Eigenschaften wird von den Lacken des vorbeschriebenen Stands der Technik nicht erreicht.

Zu den Komponenten, aus denen die erfindungsgemässen Einbrennlacke aufgebaut sind, ist im einzelnen folgendes auszuführen:

A) Als Komponente A eignen sich Monoester der Acryl- oder Methacrylsäure mit Diolen, die 2 bis 4 Kohlenstoffatome enthalten, wie z. B. Hydroxyethylacrylat, Hydroxypropylacrylat, Butandiolmonoacrylat und Hydroxyethylmethacrylat, Hydroxypropylmethacrylate und Hydroxybutylmethacrylate. Bevorzugt sind Hydroxyethylacrylat und Hydroxypropylacrylat. Die Komponente A ist im Copolymerisat in einer Menge von 18 bis 27, vorzugsweise 18 bis 24 Gew.-% einpolymerisiert. Sinkt die Menge der Komponente A im Copolymerisat unter 18 Gew.-%, dann ist die Elastizität der Lacke bei gleichzeitig ausreichender Härte nicht mehr gegeben. Überchreitet die menge der Komponente A im Copolymerisat den Wert von 27 Gew.-%, dann verschlechtert sich die Witterungsbeständigkeit erheblich.

B) Als Komponente B eignen sich Ester der Acryl- oder Methacrylsäure mit 3 bis 8 Kohlenstoffatome enthaltenden Monoalkoholen, deren Homopolymerisat eine Glastemperatur von weniger als −40° C aufweist, wie z. B. Propylacrylat, n-Butylacrylat, 2-Ethylhexylacrylat oder 2-Ethylhexylmethacrylat. Bevorzugt sind n-Butylacrylat und 2-Ethylhexylacrylat. Die Komponente B ist im Copolymerisat in einer Menge von 28 bis 45, vorzugsweise 28 bis 40 Gew.-% einpolymerisiert. Sinkt die Menge der Komponente B im Copolymerisat unter 28 Gew.-%, dann wird die Witterungsbeständigkeit des Lackfilms erheblich verschlechtert. Überschreitet die Menge der Komponente B im Copolymerisat den Wert von 45 Gew.-%, dann ist eine ausreichende Filmärte des Lacks nicht mehr gegeben.

C) Als Komponente C eignen sich Ester der Acryl- oder Methacrylsäure, bei denen die Glastemperatur des Homopolymerisates über 35° C liegt, wie z. B. tert.-Butylacrylat, Methylmethacrylat und Ethylmethacrylat. Die Komponente C ist im Copolymerisat in einer Menge von 32 bis 50, vorzugsweise 40 bis 50 Gew.-% einpolymerisiert. Sinkt die Menge der Komponente C im Copolymerisat unter 32 Gew.-%, dann ist eine ausreichende Filmärte des Lacks nicht mehr gegeben; überschreitet sie den Wert von 50 Gew.-%, dann verschlechtert sich die Witterungsbeständigkeit des Lackfilms erheblich.

D) Als Komponente D werden 0,5 bis 3 Gew.-% Acrylsäure oder Methacrylsäure verwendet. Verzichtet man auf den Einbau der Komponente D, dann erhöht sich die Einbrenntemperatur, und es verschlechtert sich der Glanz. Erhöht man die Menge der Komponente D im Copolymerisat auf über 3 Gew.-%, dann verschlechtert sich die Lagerstabilität der Lacke.

Das Molekulargewicht der Copolymerisate, charakterisiert durch den K-Wert nach Fikentscher ("Cellulose-Chemie", *13*, 58 [1932]), beträgt 13 bis 17, vorzusgweise 13 bis 15. Sinkt der K-Wert unter 13, so lässt sich zwar der Feststoffgehalt des spritzfertigen Lackes bei gleicher Viskosität erhöhen, die Witterungsbeständigkeit wird jedoch erheblich verschlechtert. Bei einem K-Wert über 17 kann die Witterungsbeständigkeit ausreichend sein, der Feststoffgehalt bei Spritzviskosität liegt jedoch bei etwa 40 Gew.-% und tiefer.

Die Herstellung der Copolymerisate geschieht im allgemeinen nach üblichen, bekannten Polymerisationsverfahren, beispielsweise nach den Verfahren der radikalischen Polymerisation in Lösung, in Suspension oder Substanz, wobei im allgemeinen die üblichen radikalliefernden Polymerisationsinitiatoren, wie z. B. Peroxide oder Azoverbindungen, sowie ggf. Regler, wie z. B. Mercaptane, Alkohole oder andere Verbindungen mit labilem Wasserstoff, wie z. B. Cumol, mitverwendet werden können. Besonders vorteilhaft lassen sich die Copolymerisate nach dem Verfahren der Lösungspolymerisation herstellen.

Die Copolymerisate können in gelöster Form, d. h. in üblichen, ggf. bereits bei der Polymerisation verwendeten üblichen Lösungsmitteln, wie z. B. Alkoholen, Aromaten, Estern, Etherestern oder in Gemischen dieser Lösungsmittel untereinander oder mit anderen Lösungs-, Verdünnungs- und/oder Weichmachungsmitteln verwendet werden.

Als vernetzend wirkende Aminoplastvorkondensate, die ggf. in Mengen bis zu 60, vorzugsweise 10 bis 40, insbesondere 25 bis 40 Gew.-%, bezogen auf Copolymerisat, zusammen mit dem Copolymerisat verwendet werden können, sind insbesondere solche mit Carbonamid-N-methylolethergruppen geeignet. Die Herstellung von Aminoplastvorkondensaten, wie sie für die erfindungsgemässen Bindemittel in Frage kommen, sind z. B. beschrieben in Houben-Weyl, „Methoden der organischen Chemie" (1963), Bd. 14/2, S. 319 ff.

Die erfindungsgemässen Einbrennlacke können ausser den Bindemittelkomponenten weitere Hilfsstoffe, wie lösliche Farbstoffe, UV-Stabilisatoren, Härtungskatalysatoren, Lösungsmittel, Mittel zur Verbesserung des Verlaufs, sowie weitere, für Lacke übliche Hilfsmittel enthalten, z. B. niedermolekulare organische oder anorganische, im Lösungsmittel gelöste Säuren wie Phosphorsäure, Salicylsäure usw.

Die Lacke werden beispielsweise durch Spritzen, wie in Kittel, „Handbuch der Lacke und Beschichtungen", Bd. VII, S. 59 bis 95, ausgeführt, auf den Untergrund appliziert.

Die erfindungsgemässen Einbrennlacke eignen sich beispielsweise zur Herstellung von Automobillacken, besonders als *high solid*-Klarlacke für 2 Schichtmetallics.

Das Einbrennen der erfindungsgemässen Lacke wird im allgemeinen bei Temperaturen von 80 bis 180, insbesondere 120 bis 150° C, und in Abhängigkeit von der Temperatur innerhalb 10 bis 120, insbesondere 20 bis 60 min in den dafür geeigneten Vorrichtungen durchgeführt.

Die in den Beispielen genannten Teile und Prozente beziehen sich, sofern nicht anders angegeben, auf das Gewicht.

### Herstellung der Copolymerisate
### Polymerisat 1

Zu einer Vorlage aus 200 Teilen n-Butanol und 200 Teilen eines Kohlenwasserstoffgemisches mit einem Aromatengehalt von 98% und einem Siedebereich von 163 bis 180° C (z. B. ®Solvesso 100) wird unter Stickstoff bei 125° C innerhalb 2 h eine Zulaufmischung bestehend aus 120 Teilen Hydroxypropylacrylat, 234 Teilen n-Butylacrylat, 237 Teilen tert.-Butylacrylat, 9 Teilen Acrylsäure und 9 Teilen tert.-Butylperbenzoat zugegeben. Es wird 1 h bei 125° C nachpolymerisiert, dann werden 6 Teile tert.-Butylperbenzoat zugegeben und eine weitere Stunde bei 125° C nachpolymerisiert. Man erhält eine klare Lösung eines Polymerisats mit einem Feststoffgehalt von 60,8%, einer Säurezahl des (100%igen) Produkts von 16,2 und einem K-Wert von 15,0.

### Polymerisat 2

Zu einer Vorlage aus 200 Teilen n-Butanol und 200 Teilen des obengenannten Kohlenwasserstoffgemisches (Solvesso 100) wird unter Stickstoff bei 125° C innerhalb 2 h eine Zulaufmischung bestehend aus 175,5 Teilen Hydroxypropylacrylat, 201,5 Teilen n-Butylacrylat, 263 Teilen tert.-Butylacrylat, 9 Teilen Acrylsäure und 9 Teilen tert.-Butylperbenzoat zugegeben. Es wird 1 h bei 125° C nachpolymerisiert. Dann werden 6 Teile tert.-Butylperbenzoat zugegeben und es wird eine weitere Stunde bei 125° C nachpolymerisiert. Man erhält eine klare Polymerlösung mit einem Feststoffgehalt von 62,6%, einer Säurezahl des (100%igen) Produkts von 15,7 und einem K-Wert von 15,3.

### Polymerisat 3

Zu einer Vorlage aus 200 Teilen n-Butanol und 200 Teilen des obengenannten Kohlenwasserstoffgemisches (Solvesso 100) wird unter Stickstoff bei 125° C innerhalb 2 h eine Zulaufmischung bestehend aus 120 teilen Hydroxypropylacrylat, 174 Teilen n-Butylacrylat, 297 Teilen tert.-Butylacrylat, 9 Teilen Acrylsäure, 9 Teilen tert.-Butylperbenzoat und 24 Teilen tert.-Dodecylmercaptan zugegeben. Es wird 1 h bei 125° C nachpolymerisiert. Dann werden 6 Teile tert.-Butylperbenzoat zugegeben und es wird eine weitere Stunde bei 125° C nachpolymerisiert. Man erhält eine klare Lösung eines Polymerisats mit einem Feststoffgehalt von 59,5%, einer Säurezahl/100%ig von 22,2 und einem K-Wert von 13,8.

### Polymerisat 4 (Vergleichsbeispiel mit höherem K-Wert)

Zu einer Vorlage aus 1099 Teilen des obengenannten Kohlenwasserstoffgemisches (Solvesso 100) wird unter Stickstoff bei 130° C innerhalb 3 h eine Zulaufmischung bestehend aus 954 Teilen n-Butylacrylat, 540 Teilen Methylmethacrylat, 270 Teilen Hydroxypropylacrylat, 36 Teilen Acrylsäure, 2,7 Teilen Mercaptoethanol, 16,7 Teilen tert.-Butylperbenzoat und 67,2 Teilen des Kohlenwasserstoffgemisches (Solvesso 100) zugegeben. Es wird 30 min bei 130° C nachpolymerisiert. Dann werden 8,5 Teile tert.-Butylperbenzoat in 33,8 Teilen Kohlenwasserstoffgemisch (Solvesso 100) zugegeben und es wird eine weitere Stunde bei 130° C nachpolymerisiert. Danach werden nochmals 9 Teile tert.-Butylperbenzoat zugegeben und es wird 1 h bei 130° C auspolymerisiert. Man erhält eine klare Lösung eines Polymerisats mit einem Feststoffgehalt von 60,6%, einer Säurezahl des (100%igen) Produkts von 18,9 und einem K-Wert von 18,3.

*Polymerisat 5 (Vergleichsbeispiel mit tieferem K-Wert und höheren Anteilen an tert.-Butylacrylat und Hydroxypropylacrylat)*

Zu einer Vorlage aus 200 Teilen n-Butanol und 200 Teilen des obengenannten Kohlenwasserstoffgemisches (Solvesso 100) wird unter Stickstoff bei 150° C innerhalb 2 h eine Zulaufmischung bestehend aus 210 Teilen Hydroxypropylacrylat, 381 Teilen tert.-Butylacrylat, 9 Teilen Acrylsäure und 12 Teilen tert.-Butylperbenzoat zugegeben. Es wird 1 h bei 150° C nachpolymerisiert. Dann werden 6 teile tert.-Butylperbenzoat zugegeben und eine weitere Stunde bei 155° C nachpolymerisiert. Man erhält eine klare Polymerlösung mit einem Feststoffgehalt von 61,5%, einer Säurezahl des 100%igen Produktes von 14,8 und einem K-Wert von 12.

*Polymerisat 6 (Vergleichsbeispiel mit tieferem K-Wert)*

Zu einer Vorlage aus 200 Teilen des obengenannten Kohlenwasserstoffgemisches (Solvesso 100) wird unter Stickstoff bei 155° C innerhalb 2 h eine Zulaufmischung bestehend aus 160 Teilen Hydroxypropylacrylat, 232 Teilen n-Butylacrylat, 396 Teilen tert.-Butylacrylat, 12 Teilen Acrylsäure und 24 Teilen tert.-Butylperbenzoat zugegeben. Es wird 1 h bei 155° C nachpolymerisiert. Dann werden 8 Teile tert.-Butylperbenzoat zugegeben und es wird 1 h bei 155° C nachpolymerisiert. Man kühlt auf 100° C und gibt 67 Teile n-Butanol hinzu. Man erhält eine klare Polymerlösung mit einem Feststoffgehalt von 74,8%, einer Säurezahl des 100%igen Produkts von 25,7 und einem K-Wert von 12.

*Herstellung der Klarlacke*

Zur Herstellung der Klarlacke werden die Acrylatharze mit einem mit Isobutanol veretherten Melamin/Formaldehyd-Harz (z. B. ®Luwipal 015 der BASF AG) nach folgendem Rezept kombiniert:

     108,3 Teile Acrylatharz (60% Feststoffgehalt)
     63,6 Teile Luwipal 015 (55% Feststoffgehalt)
     2,0 Teile Silikonöl A, 1%ig in Xylol
     15-20 Teile Kohlenwasserstoffgemisch (Solvesso 100)

Bei der Spritzviskosität von 40 s (gemessen im DIN-Becher 4) werden die Lacke nass auf einen konventionellen Basislack (Zelluloseacetobutyrat, Acrylat-, Melaminharz) gespritzt und 30 min bei 130° C eingebrannt. Die Trockenfilmdicke des Basislacks liegt bei ca. 10 µm, die des Decklacks bei 50 bis 60 µm. Von den eingebrannten Lacken werden die mechanischen Eigenschaften (Pendelhärte, Erichsen-Tiefung) und die Kurzzeitbewitterungsbeständigkeit im Xenontest 1200 geprüft (DIN 53 209). Die Prüfergebnisse sind in der folgenden Tabelle aufgeführt.

*Tabelle*

| Polymerisat Nr. | Feststoffgehalt bei Spritzviskosität | Pendelhärte (DIN 53 157) (s) | Erichsen-Tiefung (DIN 52 156) (mm) | Aussehen* nach Kurzzeitbewitterung von 2000 h |
|---|---|---|---|---|
| 1 | 50,1 | 123 | 6,2 | 0 bis 1 |
| 2 | 50,0 | 158 | 6,2 | 1 |
| 3 | 50,4 | 137 | 6,8 | 0 bis 1 |
| 4 | 41,6 | 123 | 6,0 | 0 bis 1 |
| 5 | 50,4 | 193 | 2,2 | 5 |
| 6 | 50,1 | 136 | 5,6 | 5 |

\* Erklärung: Bewertung von 0 bis 5      0: keine Blasen + Risse
                                          5: voller Blasen + Risse

## Patentansprüche

1. Einbrennlacke auf Basis hydroxylgruppenhaltiger Copolymerisate, ggf. in Kombination mit üblichen, vernetzend wirkenden Aminoplatvorkondensaten, dadurch gekennzeichnet, dass sie als Bindemittel ein Copolymerisat aus

A) 18 bis 27 Gew.-% mindestens eines Monoacryl- oder Monomethacrylesters eines 2 bis 4 Kohlenstoffatome enthaltenden Alkandiols,

B) 28 bis 45 Gew.-% eines Esters der Acryl- oder Methacrlysäure mit 3 bis 8 Kohlenstoffatome enthaltenden Monoalkoholen, dessen Homopolymerisat eine Glastemperatur von weniger als −40° C aufweist,

C) 32 bis 50 Gew.-% eines Esters der Acryl- oder Methacrylsäure, dessen Homopolymerisat eine Glastemperatur von über 35° C aufweist,

D) 0,5 bis 3 Gew.-% Acrylsäure oder Methacrylsäure enthalten, mit der Massgabe, dass die Summe der unter (A) bis (D) genannten Prozentzahlen 100 ist und der K-Wert nach Fikentscher 13 bis 17 beträgt.

2. Einbrennlacke nach Anspruch 1, dadurch gekennzeichnet, dass das Copolymerisat als Komponente (A) Hydroxyethylacrylat oder Hydroxypropylacrylat einpolymerisiert enthält.

3. Einbrennlacke nach einem der Ansprüche 1 oder 2, dadurch gekennzeichnet, dass das Copolymerisat als Komponente (B) n-Butylacrylat oder 2-Ethylacrylat einpolymerisiert enthält.

4. Einbrennlacke nach einem der vorhergehenden Ansprüche, dadurch gekennzeichnet, dass das Copolymerisat als Komponente (C) tert.-Butylacrylat, Methylmethacrylat oder Ethylmethacrylat einpolymerisiert enthält.

5. Einbrennlacke nach einem der vorhergehenden Ansprüche, dadurch gekennzeichnet, dass sie 10 bis 40 Gew.-%, bezogen auf Copolymerisat, vernetzend wirkendes Aminoplastvorkondensat enthalten.

6. Einbrennlacke nach einem der vorhergehenden Ansprüche, dadurch gekennzeichnet, dass das Copolymerisat nach dem Verfahren der Lösungspolymerisation hergestellt worden ist.

7. Verwendung der Einbrennlacke nach einem der vorhergehenden Ansprüche als Decklack für Mehrschichtenlackierung.

## Revendications

1. Vernis à cuire à base de copolymérisats à groupes hydroxyle, éventuellement combinés avec des précondensats d'aminoplastes à action réticulante usuels, caractérisés en ce qu'ils contiennent, comme liant, un copolymérisat composé de

A) 18 à 27% en poids au moins d'un ester monoacrylique ou monométhacrylique d'un alcanediol en $C_2$ à $C_4$,

B) 28 à 45% en poids d'un ester de l'acide acrylique ou de l'action méthacrylique et d'un monol en $C_3$ à $C_8$, dont l'homopolymérisat possède une température de transition vitreuse inférieure à $-40°$ C,

C) 32 à 50% en poids d'un ester de l'acide acrylique ou de l'acide méthacrylique, dont l'homopolymérisat possède une température de transition vitreuse supérieure à $35°$ C, et

D) 0,5 à 3% en poids d'acide acrylique ou d'acide méthacrylique,
la somme des pourcentages A à D étant égale à 100 et la valeur K selon Fikentscher comprise entre 13 et 17.

2. Vernis à cuire suivant la revendication 1, caractérisés en ce que le composant (A) du copolymérisat est de l'acrylate d'hydroxyéthyle ou de l'acrylate d'hydroxypropyle.

3. Vernis à cuire suivant l'une des revendications 1 ou 2, caractérisés en ce que le composant

(B) du copolymérisat est de l'acrylate de n-butyle ou de l'acrylate de 2-éthylhexyle.

4. Vernis à cuire suivant l'une des revendications précédentes, caractérisés en ce que le composant (C) du copolymérisat est de l'acrylate de butyle tertiaire, du méthacrylate de méthyle ou du méthacrylate d'éthyle.

5. Vernis à cuire suivant l'une des revendications précédentes, caractérisés en ce qu'ils contiennent entre 10 et 40% du poids du copolymérisat d'un précondensat d'aminoplaste à action réticulante.

6. Vernis à cuire suivant l'une des revendications précédentes, caractérisés en ce que le copolymérisat a été préparé suivant la technique de la polymérisation en solution.

7. Utilisation de vernis à cuire suivant l'une des revendications précédentes comme vernis de finition sur un vernis à plusieurs couches.

## Claims

1. A baking finish based on hydroxyl-containing copolymers, which may be used in combination with conventional aminoplast precondensates having a cross-linking action, wherein the binder is a copolymer obtained from

(A) from 18 to 27% by weight of at least one monoacrylate or monomethacrylate of an alkanediol of 2 to 4 carbon atoms,

(B) from 28 to 45% by weight of an acrylate or methacrylate of a monoalcohol of 3 to 8 carbon atoms, the homopolymer of which ester has a glass transition temperature of below $-40°$ C,

(C) from 32 to 50% by weight of an acrylate or methacrylate whose homopolymer has a glass transition temperatur of above $35°$ C, and

(D) from 0.5 to 3% by weight of acrylic or methacrylic acid, with the proviso that the sum of the percentage given under (A) to (D) is 100 and the Fikentscher K value of the copolymer is from 13 to 17.

2. A baking finish as claimed in Claim 1, wherein the copolymer contains, as component (A), hydroxyethyl acrylate or hydroxypropyl acrylate units.

3. A baking finish as claimed in Claim 1 or 2, wherein the copolymer contains, as component (B), n-butyl acrylate or 2-ethylhexyl acrylate units.

4. A baking finish as claimed in any of the preceding claims, wherein the copolymer contains, as component (C), tert.-butyl acrylate, methyl methacrylate or ethyl methacrylate units.

5. A baking finish as claimed in any of the preceding claims, which contains from 10 to 40% by weight, based on copolymer, of an aminoplast precondensat having a cross-linking action.

6. A baking finish as claimed in any of the preceding claims, wherein the copolymer has been prepared by solution polymerization.

7. The use of a baking finish as claimed in any of the preceding claims as a top coat for multi-layer coatings.